Europäisches Patentamt

European Patent Office

Office européen des brevets

(19)

(11) Numéro de publication : **0 091 346**
**B1**

(12) FASCICULE DE BREVET EUROPÉEN

(45) Date de publication du fascicule du brevet :
28.05.86

(51) Int. Cl.⁴ : **B 60 K 17/04**, B 62 D 61/12,
B 60 B 27/00

(21) Numéro de dépôt : 83400615.7

(22) Date de dépôt : 24.03.83

(54) Véhicule à garde au sol variable.

(30) Priorité : 26.03.82 FR 8205597

(43) Date de publication de la demande :
12.10.83 Bulletin 83/41

(45) Mention de la délivrance du brevet :
28.05.86 Bulletin 86/22

(84) Etats contractants désignés :
DE GB IT

(56) Documents cités :
AT-A- 200 010
FR-A- 1 222 968
FR-A- 1 352 346
FR-A- 1 521 230
GB-A- 403 006
US-A- 2 786 541
US-A- 3 689 101

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Courty, Roger Lucien**
**33, rue Montesquieu Val d'Albian**
**Saclay F-91400 Orsay (FR)**

(74) Mandataire : **Boivin, Claude**
**9, rue Edouard-Charton**
**F-78000 Versailles (FR)**

## Description

La présente invention concerne un véhicule, notamment un véhicule tous terrains, dont la garde au sol est variable et qui comporte un support lié au châssis, un essieu dont chacun des moyeux est monté pivotant par rapport au support autour d'un axe excentré par rapport à l'axe de la roue, et des moyens pour solidariser chacun des moyeux et le support dans au moins deux positions angulaires différentes correspondant à des gardes au sol différentes, le support de roue étant monté à rotation par rapport au moyeu et relié par des moyens de transmission à un arbre d'entraînement qui est monté à rotation dans le moyeu en ayant pour axe l'axe de pivotement de ce moyeu par rapport au support. Un véhicule de ce type est décrit dans le brevet FR-A-1 352 346.

La présente invention a pour objet un véhicule du type ci-dessus dont l'essieu moteur est muni non seulement de moyens d'entraînement, mais encore de moyens de freinage.

Le véhicule selon l'invention est caractérisé en ce que le moyeu et le support ne peuvent être solidarisés l'un à l'autre que dans deux positions angulaires différentes et en ce qu'un disque de frein est fixé au support de roue et passe entre deux étriers de frein qui sont écartés l'un de l'autre dans une direction sensiblement perpendiculaire au plan passant par les deux positions que peut occuper l'axe de roue.

Grâce à cette disposition, le freinage est le même sur la roue dans l'une et l'autre positions relatives du moyeu et du support, c'est-à-dire quelle que soit la garde au sol.

Dans un mode de réalisation avantageux de l'invention, les deux positions relatives du moyeu et du support sont écartées angulairement l'une de l'autre de sensiblement 180°, et les deux étriers de frein sont écartés l'un de l'autre dans une direction sensiblement perpendiculaire à celle dans laquelle l'axe de pivotement du moyeu et l'axe du support de roue sont écartés l'un de l'autre lorsque le moyeu est solidarisé au support.

Le véhicule comporte de préférence des moyens de butée limitant le pivotement du moyeu respectivement dans la position basse du véhicule et dans sa position haute.

On a décrit ci-après, à titre d'exemple non-limitatif, un mode de réalisation d'un véhicule selon l'invention avec référence aux dessins annexés dans lesquels :

La figure 1 est une vue en coupe axiale d'un demi-essieu moteur du véhicule ;

La figure 2 en est une vue suivant la flèche F de la figure 1 ;

La figure 3 en est une vue suivant III-III de la figure 2 ;

Les figures 4 et 5 montrent schématiquement le demi-essieu respectivement en position basse du véhicule et en position haute de celui-ci.

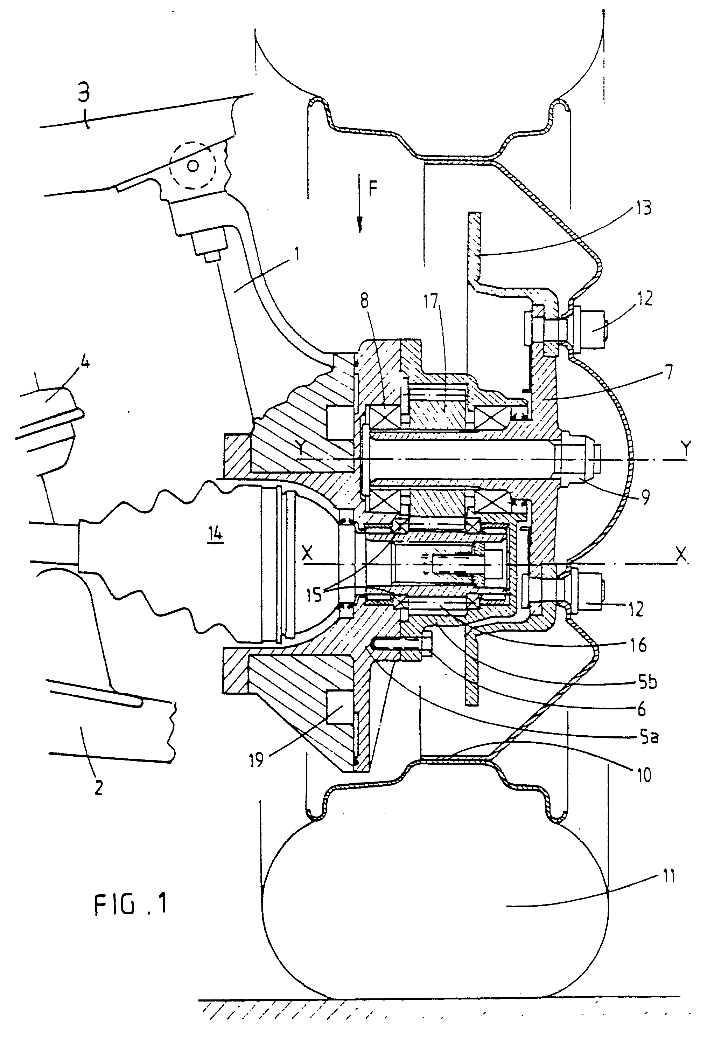

A la figure 1, on voit un support de moyeu 1 relié de manière connue en soi à deux bras de support de roue 2 et 3 qui sont montés pivotants sur la caisse ou carrosserie du véhicule et dont l'un est relié à cette caisse ou carrosserie par un amortisseur 4.

Dans le support de moyeu 1 est monté pivotant autour d'un axe X-X un moyeu formé de deux parties 5a et 5b fixées l'une à l'autre par des vis 6. Un arbre de support de roue 7 est monté à rotation dans le moyeu 5a-5b par l'intermédiaire de roulements 8, autour d'un axe Y-Y excentré par rapport à l'axe X-X, et est maintenu en place par un écrou 9. La jante 10 portant le pneumatique 11 est fixée sur le support 7 par des vis 12, en même temps que le disque de frein 13.

L'essieu représenté est moteur. Sur un arbre d'entraînement 14 est claveté un pignon 16 qui est en prise avec un pignon 17 claveté sur l'arbre support de roue 7 et est monté à rotation dans le moyeu 5a-5b par l'intermédiaire de roulements 15.

Le mouvement de pivotement du moyeu 5a-5b par rapport au support 1 est limité à environ 180° par deux butées 18a et 18b solidaires du moyeu, engagées dans une gorge annulaire 19 du support 1 et sur le trajet desquelles se trouve un bossage 20 formant guide de verrou et présentant deux faces planes 20a et 20b.

Dans le guide de verrou 20 est monté coulissant un verrou 21 susceptible de s'engager sous l'action d'un ressort 22 soit dans un trou 23a du moyeu quand la butée 18a est au contact de la face 20a du guide 20, soit dans un trou 23b diamétralement opposé quand la butée 18b est au contact de la face 20b du guide. Le verrou 21 est fixé à l'une des extrémités d'un câble de commande 24 disposé dans une gaine 25 et dont l'autre extrémité porte un organe de manœuvre non représenté.

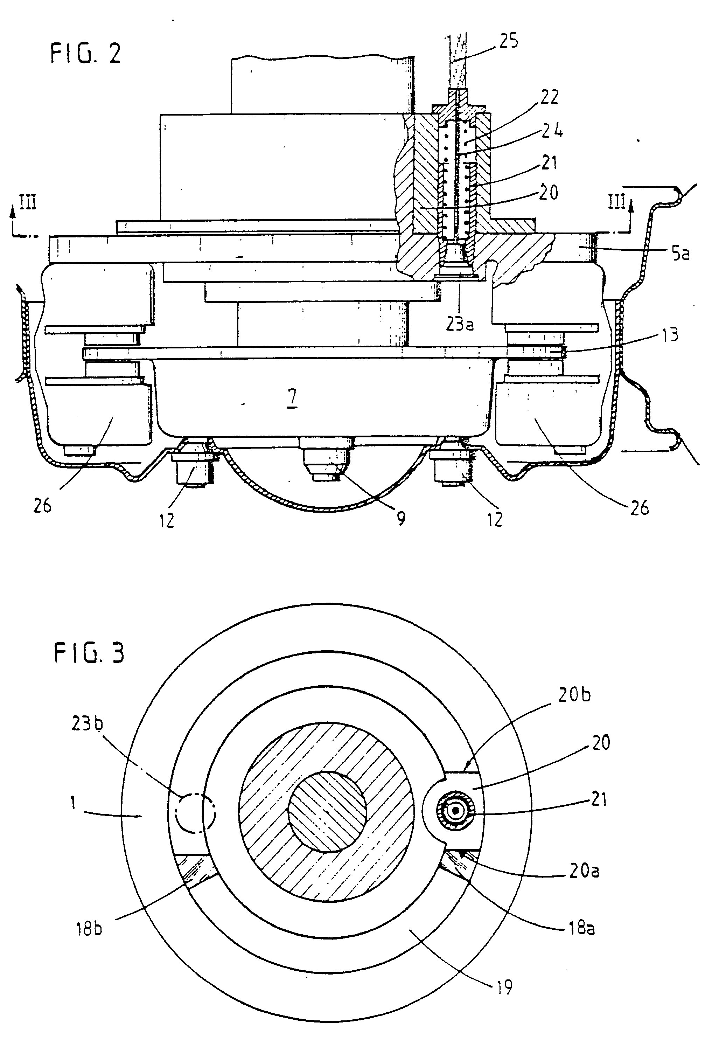

Le disque de frein 13 passe entre deux étriers de frein 26 qui sont fixés au moyeu (Fig. 2) et sont écartés l'un de l'autre dans une direction sensiblement perpendiculaire au plan passant par les deux positions que peut occuper l'axe de roue Y-Y, c'est-à-dire à la direction dans laquelle l'axe X-X de pivotement du moyeu et l'axe Y-Y de l'arbre de support de roue 7 sont écartés l'un de l'autre lorsque le moyeu 5a-5b est solidarisé au support 1.

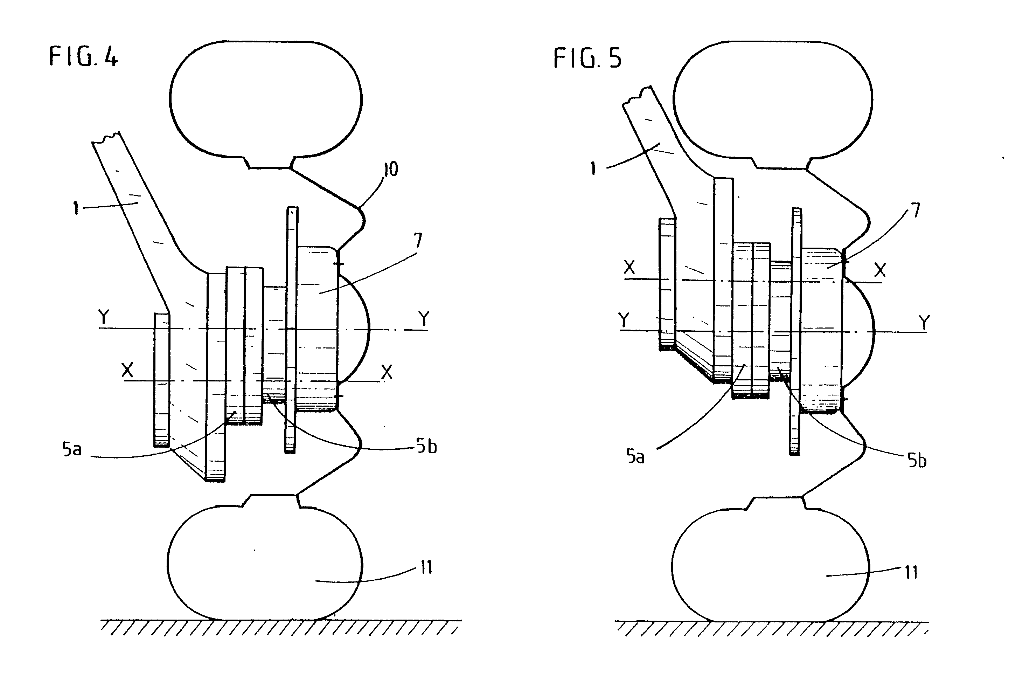

Aux figures 1 et 4, le véhicule est en position basse. Pour passer en position haute, le conducteur engage une vitesse avant, dégage le verrou 21 du trou 23a dans lequel il était engagé, et embraye légèrement tout en freinant. L'arbre de support de roue 7 étant immobilisé par rapport au moyeu 5a-5b, l'arbre 14 entraîne le moyeu qui pivote jusqu'à ce que la butée 18b soit au contact de la face 20b du guide 20 ; le conducteur engage alors le verrou 21 dans le trou 23b pour bloquer le moyeu dans sa nouvelle position. Le véhicule se trouve alors en position haute (Fig. 5).

Pour revenir en position basse, le conducteur opère de manière analogue, après avoir enclenché la marche arrière.

2

## Revendications

1. Véhicule à garde au sol variable comportant un support (1) lié au châssis, un essieu dont chacun des moyeux (5a-5b) est monté pivotant par rapport au support (1) autour d'un axe X-X excentré par rapport à l'axe Y-Y de la roue, et des moyens pour solidariser chacun des moyeux et le support (1) dans au moins deux positions angulaires différentes correspondant à des gardes au sol différentes, le support de roue (7) étant monté à rotation par rapport au moyeu (5a-5b) et relié par des moyens de transmission à un arbre d'entraînement (14) qui est monté à rotation dans le moyeu en ayant pour axe l'axe de pivotement X-X de ce moyeu par rapport au support, caractérisé en ce que le moyeu (5a-5b) et le support (1) ne peuvent être solidarisés l'un à l'autre que dans deux positions angulaires différentes et en ce qu'un disque de frein (13) est fixé au support de roue (7) et passe entre deux étriers de frein (26) qui sont écartés l'un de l'autre dans une direction sensiblement perpendiculaire au plan · passant par les deux positions que peut occuper l'axe de roue.

2. Véhicule selon la revendication 1, caractérisé en ce que les deux dites positions sont écartées angulairement l'une de l'autre de sensiblement 180° et en ce que les deux étriers de frein (26) sont écartés l'un de l'autre dans une direction sensiblement perpendiculaire à celle dans laquelle l'axe X-X de pivotement du moyeu et l'axe Y-Y du support de roue (7) sont écartés l'un de l'autre lorsque le moyeu (5a-5b) est solidarisé au support (1).

3. Véhicule selon la revendication 1 ou 2, caractérisé en ce qu'il comporte des moyens de butée limitant le pivotement du moyeu respectivement dans la position basse du véhicule et dans sa position haute.

4. Véhicule selon la revendication 3, caractérisé en ce que les moyens de butée sont constitués par deux butées ou pavés (18a et 18b) solidaires du moyeu, engagés dans une rainure circulaire (19) du support (1), et pouvant s'appliquer contre un bossage du support.

5. Véhicule selon la revendication 4, caractérisé en ce que le bossage est constitué par le guide (20) d'un verrou.

## Claims

1. Vehicle with vertical adjusting mechanism comprising a support (1) connected to the chassis, an axle in which each of the hubs (5a-5b) is mounted for pivoting with respect to the support (1) about an axis X-X offcentered with respect to the axis Y-Y of the wheel, and means for interlocking each of the hubs and the support (1) in at least two different angular positions corresponding to different ground clearances, the wheel support (7) being mounted for rotation with respect to the hub (5a-5b) and connected by transmission means to a drive shaft (14) which is mounted for rotation in the hub while having for axis the pivoting axis X-X of this hub with respect to the support, characterized in that the hub (5a-5b) and the support (1) can only be interlocked with each other in two different angular positions and in that a brake disk (13) is fixed to the wheel support (7) and passes between two brake lugs (26) which are spaced apart from each other in a direction substantially perpendicular to the plane passing through the two positions which the wheel axis may occupy.

2. Vehicle according to claim 1, characterized in that the two said positions are spaced apart angularly from each other by substantially 180° and in that the two brake lugs (26) are spaced apart from each other in a direction substantially perpendicular to that in which the pivoting axis X-X of the hub and the axis Y-Y of the wheel support (7) are spaced apart from each other when the hub (5a-5b) is interlocked with the support (1).

3. The vehicle according to claim 1 or 2, characterized in that it comprises stop means limiting the pivoting of the hub respectively in the low position of the vehicle and in its high position.

4. Vehicle according to claim 3, characterized in that the stop means are formed by two stops or blocks (18a and 18b) integral with the hub, engaged in a circular groove (19) of the support (1) and being able to be applied against a boss of the support.

5. Vehicle according to claim 4, characterized in that the boss is formed by the guide (20) of a bolt.

## Patentansprüche

1. Fahrzeug mit variabler Bodenfreiheit, welches eine mit dem Chassis verbundene Stütze (1) aufweist sowie eine Achse, bei der jede der Naben (5a-5b) in Bezug auf die Stütze (1) drehbar um eine Achse X-X angeordnet ist, die exzentrisch zur Achse Y-Y des Rades liegt, und Mittel zur kraftschlüssigen Verbindung jeder der Naben mit der Stütze (1) in mindestens zwei unterschiedlichen Winkelpositionen, welche unterschiedlichen Bodenfreiheiten entsprechen, wobei der Radträger (7) in Bezug auf die Nabe (5a-5b) drehbar angeordnet und durch Kraftübertragungsmittel mit einer Antriebswelle (14) verbunden ist, die drenbar in der Nabe angeordnet ist und als Achse die Drehachse X-X dieser Nabe in Bezug auf die Stütze besitzt, dadurch gekennzeichnet, daß die Nabe (5a-5b) und die Stütze (1) nur in zwei unterschiedlichen Winkelpositionen kraftschlüssig miteinander verbunden sein können und daß eine Bremsscheibe (13) am Radträger (7) befestigt ist und zwischen zwei Bremsgabeln (26) hindurchläuft, welche mit Abstand voneinander angeordnet sind in einer Richtung, die im wesentlichen senkrecht zu der Ebene verläuft, die durch die beiden Positionen geht, welche die Radachse einnehmen kann.

2. Fahrzeug nach Anspruch 1, dadurch gekennzeichnet, daß die beiden besagten Positionen in einem Winkelabstand von im wesentlichen 180° gegeneinander angeordnet sind und daß die beiden Bremsgabeln (26) mit Abstand voneinander angeordnet sind in einer Richtung, die im wesentlichen senkrecht zu jener Richtung verläuft, in welcher die Drehachse X-X der Nabe und die Achse Y-Y des Radträgers (7) mit Abstand voneinander angeordnet sind, wenn die Nabe (5a-5b) kraftschlüssig mit der Stütze (1) verbunden ist.

3. Fahrzeug nach Anspruch 1 oder 2, dadurch gekennzeichnet, daß es Anschlagmittel aufweist, welche die Drehung der Nabe jeweils in der tiefen und der hohen Position des Fahrzeugs begrenzen.

4. Fahrzeug nach Anspruch 3, dadurch gekennzeichnet, daß die Anschlagmittel durch zwei mit der Nabe fest verbundene Anschlagnocken oder -steine (18a und 18b) gebildet werden, welche in eine kreisringförmige Nut (19) der Stütze (1) eingreifen und sich an einen Nocken der Stütze anlegen können.

5. Fahrzeug nach Anspruch 4, dadurch gekennzeichnet, daß der Nocken durch eine Riegelführung (20) gebildet wird.

FIG .1

FIG. 2

FIG. 3

FIG.4

FIG.5

0 091 346